# EUROPEAN PATENT SPECIFICATION

(11) **EP 2 288 534 B1**
(45) Date of publication and mention of the grant of the patent: **08.08.2012**
(21) Application number: 09746161.0
(22) Date of filing: 14.05.2009
(51) Int. Cl.: B62D 35/00, B62D 29/04

(54) **STREAMLINED PANEL FOR VEHICLES**
STROMLINIENFÖRMIGE PLATTE FÜR FAHRZEUGE
PANNEAU CARÉNÉ POUR VÉHICULES

(30) Priority: 15.05.2008 IT TO20080366
(43) Date of publication of application: 02.03.2011
(73) Proprietor: Selmat Automotive S.p.A. con Unico Socio, 10121 Torino (IT)
(72) Inventor: MACCHERRONE, Michele, I-10123 Torino (IT)
(74) Representative: Lovino, Paolo
(86) International application number: PCT/IB2009/005599
(87) International publication number: WO 2009/138866

(56) References cited:
- EP-A- 1 283 155
- WO-A-99/14101
- US-A1- 2007 085 377

## Description

### TECHNICAL FIELD

The present invention relates to a streamlined panel for vehicles, in particular for an industrial vehicle, to which the following description refers without any loss of generality.

### BACKGROUND ART

As is known, some industrial vehicles comprise a tractor cab, and a trailer with a front surface normally larger than that of the cab, so that the cab must be fitted with a kit of streamlined panels or so-called spoilers for deflecting and directing the air when the vehicle is moving.

European patent EP1283155 describes a spoiler according to the preamble of claim 1 comprising an outer skin which defines a streamlined front surface and a rear surface, to which a supporting skeleton is connected.

The skeleton is defined by a sheet having a constant thickness, shaped so as to define reinforcing channels between which intermediate portions are in contact with and glued to the rear wall of the outer skin.

The outer skin and the skeleton define between them seats housing respective plates to which fastening screws are attached and extend outwards to fasten the spoiler to a supporting frame.

The outer skin and the skeleton are made from flat sheets of thermoplastic polymer material that are thermoformed, i.e. heated and shaped by means of compression or vacuum-operated moulding to obtain the desired final contours.

While the prior art spoilers of the type described above achieve a satisfactory surface finish and can be coloured in bulk, without requiring any additional painting, the quality of the bonding between the outer skin and the skeleton is not satisfactory.

The contact areas between the outer skin and the skeleton are very wide, so that even the slightest inaccuracy in the forming of the contours results in errors in the relative positioning and/or bonding between the two parts. In particular, the large size of the skeleton makes accurate positioning difficult. Said size cover the entire rear surface of the outer skin and is necessary in order to withstand the pressure exerted by the air when the vehicle is moving, since the skeleton is a sheet of polymeric material having a constant thickness, even though it defines reinforcing channels. The glue in the contact areas also makes accurate positioning and bonding difficult, due to the fact that it creates an additional thickness.

Moreover, the spoiler requires relatively long production times, especially owing to the times that are necessary to allow the outer skin and skeleton to cool and harden after thermoforming, and to perform trimming of the perimeter edge of the spoiler.

### DISCLOSURE OF INVENTION

The purpose of the present invention is to provide a streamlined panel for vehicles, which overcomes the drawbacks described above in a simple and inexpensive manner.

According to the present invention there is provided a streamlined panel for vehicles comprising:
- a profiled outer skin, made of plastic material, and defining a streamlined front surface and a rear surface;
- a supporting skeleton made of plastic material;
- glue to bond said supporting skeleton to said rear surface;
- at least one fastening element comprising:
   a) an internal portion housed in a fixed position between said outer skin and said supporting skeleton;
   b) an external fastening portion that is fixed with respect to said internal portion;
characterized in that said supporting skeleton comprises at least one element obtained by means of injection moulding and having a variable thickness.

### BRIEF DESCRIPTION OF THE DRAWINGS

The present invention will now be described with reference to the accompanying drawings, illustrating a non-limiting embodiment thereof, in which:
- figure 1 is a perspective view of a preferred embodiment of streamlined panels for vehicles according to the present invention;
- figures 2, 3, 4, and 5 are cross-sections on an enlarged scale, respectively, along the lines II-II, III-III, IV-IV and V-V of figure 1;
- figures 6, 7 and 8 illustrate, on an enlarged scale, three elements of a skeleton of one of the panels of figure 1;
- figures 9 and 10 illustrate, on an enlarged scale, two elements of a skeleton of another of the panels of figure 1; and
- figure 11 illustrates, on an enlarged scale and with parts removed for the sake of clarity, a skeleton of another of the panels of figure 1.

### BEST MODE FOR CURRYING OUT THE INVENTION

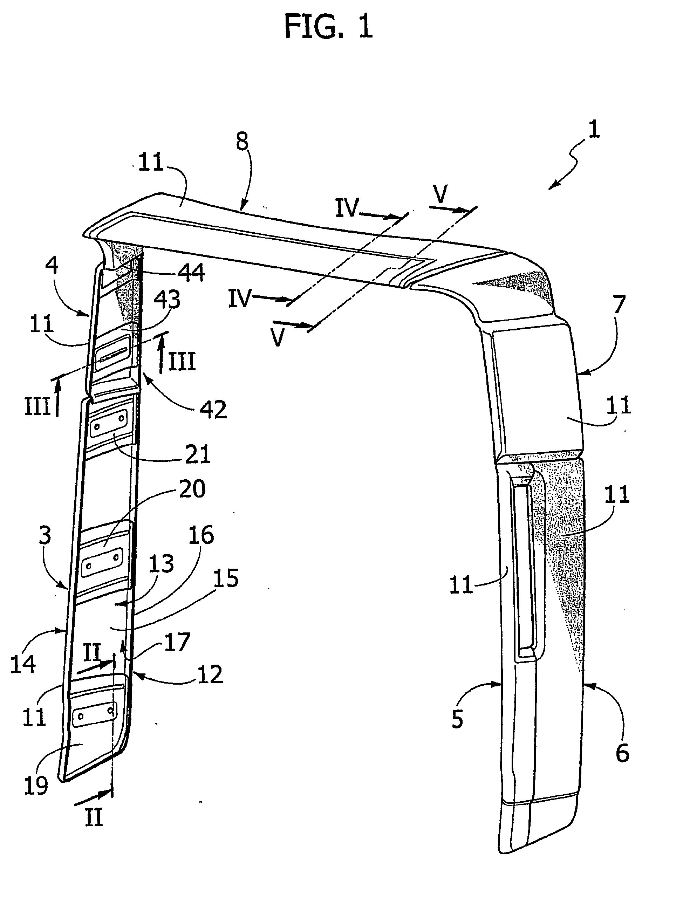

In figure 1, number 1 indicates a kit of streamlined panels, normally referred to as spoilers. The kit 1 is mounted between a front tractor cab and a rear trailer of an industrial vehicle (not illustrated), so that the spoilers guide the airflow when the vehicle is moving and reduce the aerodynamic drag.

The kit 1 comprises, on the right, a lower panel 3 and an upper panel 4; on the left, a fixed lower panel 5, a movable lower panel 6 and an upper panel 7; and in the centre a panel 8 that deflects the air upwards from the roof of the cab. The panels 3-8 are connected to the vehicle by means of one or more supporting frames (not illustrated), of a known type, normally made of metal material.

Each of the panels comprises a respective outer skin 11 and a respective supporting skeleton, which are made of plastic material by means of injection moulding and are joined together by means of glue. The skin 11 of each spoiler has a substantially constant thickness, substantially defines an extension of the side or of the roof of the cab, and has a rear surface 13 and a streamlined front surface 14, which guides the air when the vehicle is moving. The skin 11 of each spoiler comprises an intermediate portion 15 and a perimeter portion 16, which is joined to the portion 15 so as to define a recess 17 on the side of the surface 13. The recess 17 houses the supporting skeleton, which is in contact with the surface 13 at contact areas that extend either continuously along the perimeter edge of the skeleton or in internal portions of the skeleton.

As regards the panel 3, the skeleton is indicated by reference number 12 and is defined by three elements 19, 20 and 21 that are vertically spaced (at the lower end, in the centre, and at the upper end of the panel 3).

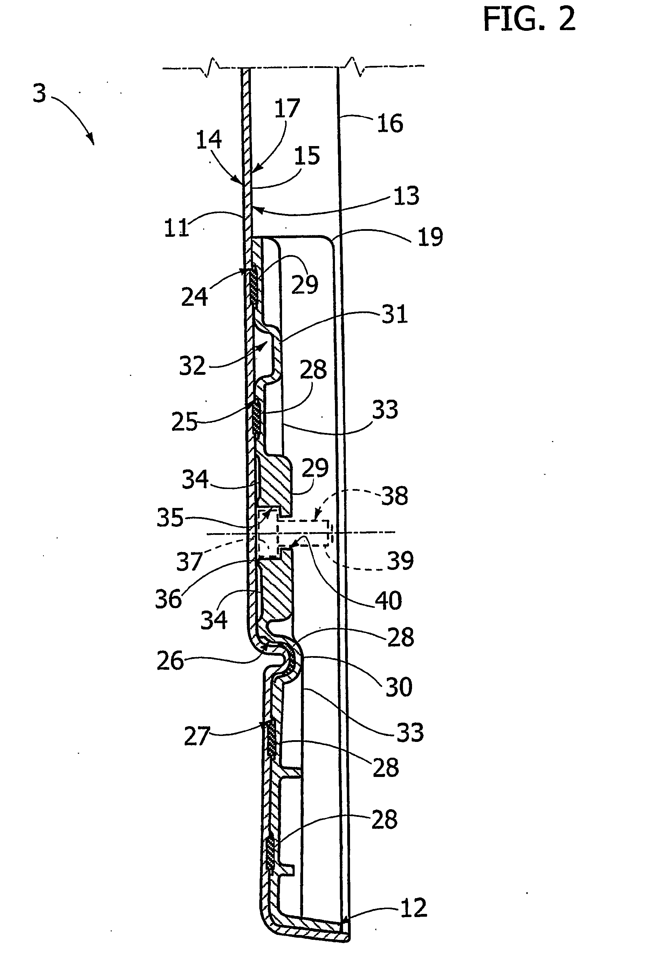

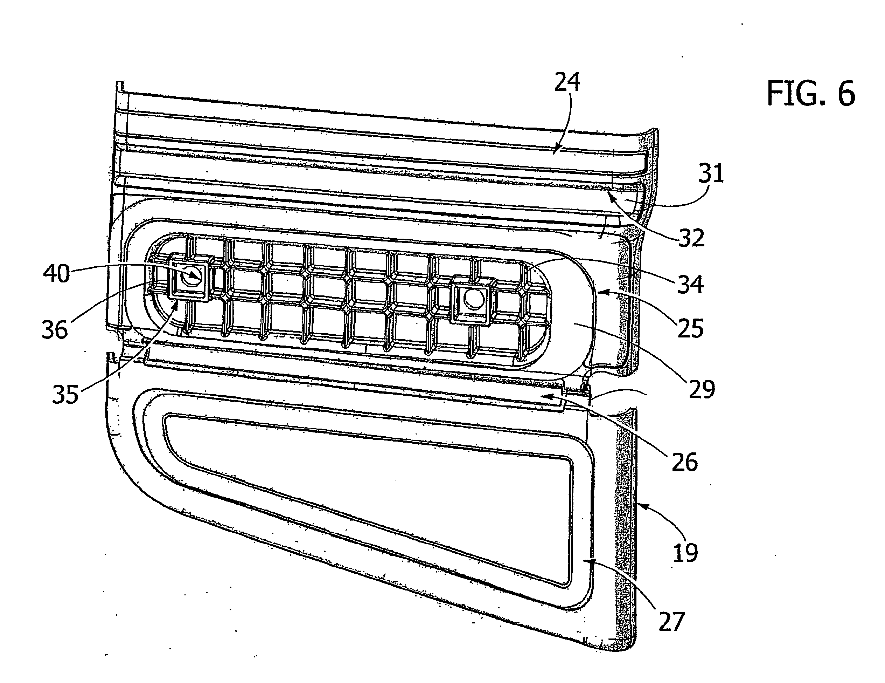

The element 19 (figs. 2 and 6) and the surface 13 define between them four cavities 24-27, which are closed, i.e. their perimeter is defined entirely by the above-mentioned contact areas. The cavities 24-27 are receptacles for glue 28 which bonds the element 19 to the surface 13, and are defined by recesses or tracks obtained in the element 19, in which the depth and cross-section are substantially constant along their entire length. The depth of the tracks 24-27 is determined according to the amount of glue to be used: for example it is approximately 1 millimetre. The amount and type of glue are, in turn, defined according to the plastic materials used, so as to achieve good adhesive strength and also the right degree of elasticity in order to avoid any stress on the plastic components due to thermal gradients.

The track 24 is rectilinear and obtained along the upper side of the element 19; the track 25 has an upturned U-shaped profile and is obtained around an intermediate portion 29 of the element 19; the track 26 is obtained in a horizontal portion 30 of the element 19 arranged beneath the portion 29 and having a substantially half-ring cross-section, like that of a corresponding portion of the skin 11 of the spoiler 3; and the track 27 is annular and is obtained in the lower end of the element 19.

The element 19 comprises a reinforcing portion 31 having a substantially constant thickness and omega-shaped cross-section, arranged in an intermediate position between the tracks 24, 25, and defining, with the surface 13, a substantially horizontal closed channel 32.

The element 19 comprises solid ribs defined by stiffening wings, which are arranged transversely with respect to the surface 13, define a variation in the thickness of the element 19 and, advantageously, intersect one another. Some of the ribs, indicated by reference number 33, are arranged on the rear face; other ribs, indicated by reference number 34, are arranged on the face oriented towards the surface 13.

The portion 29 defines a cavity that is oriented towards the surface 13 and houses the ribs 34 and two quadrangular walls 36 having their respective end edges arranged in contact with the surface 13. The walls 36 define respective seats 35, which hold the heads 37 of respective screws 38 (only one of which is visible and shown by the dashed line in fig. 2) in fixed positions. The screws 38 comprise respective threaded shanks 39, which are fixed with respect to the heads 37 and protrude from the seats 35 through respective holes 40 in the portion 29 to fasten the panel 3 to the respective supporting frame by means of threaded nuts (not illustrated). Suitable spacers (not illustrated) can be arranged on the shank and/or on the head of the screws 38 to prevent tightening torques from being discharged onto the plastic material. Elastic elements (not illustrated) can be provided between the screws 38 and the portion 29 to compensate for thermal expansion or inaccuracies during assembly and/or to dampen vibrations.

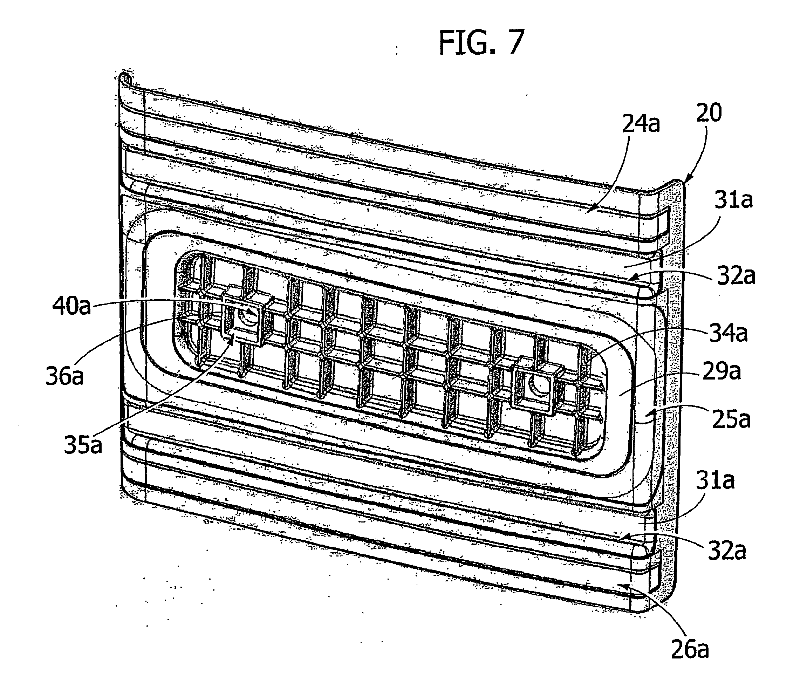

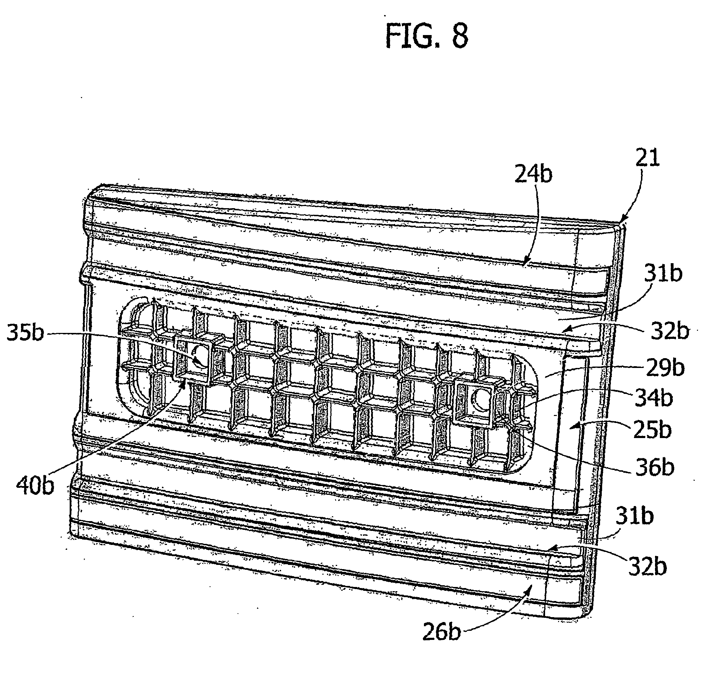

The elements 20, 21 (figs. 7 and 8) are made in the same way. Therefore, where possible, their component parts are indicated using the same reference numbers used for the element 19, followed by the reference letter "a" and, respectively, by the reference letter "b". Differently from the element 19, the element 20 is not provided with semi-circular cross-section portions and comprises two portions 31a similar to the portion 31 and arranged between the tracks 24a, 25a and 26a; the track 25a extends in a loop around the portion 29a; the track 26a is obtained along the lower side of the element 20. Differently from the element 20, the track 25b of the element 21 has an upturned U-shaped profile.

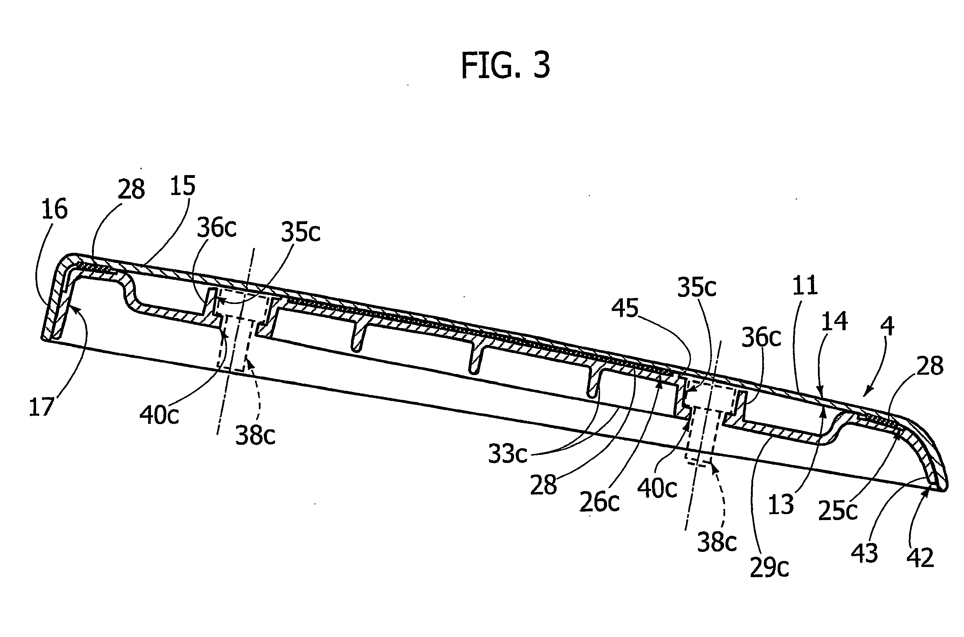

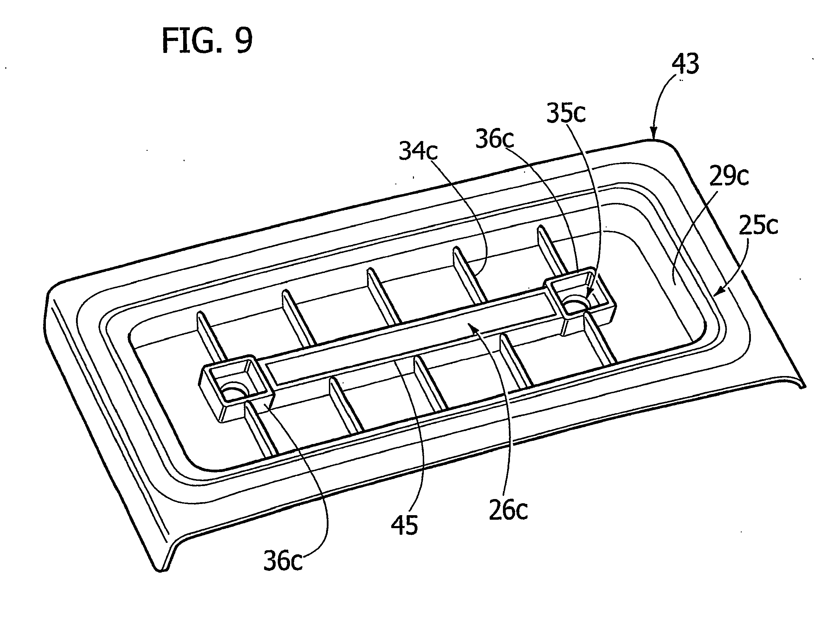

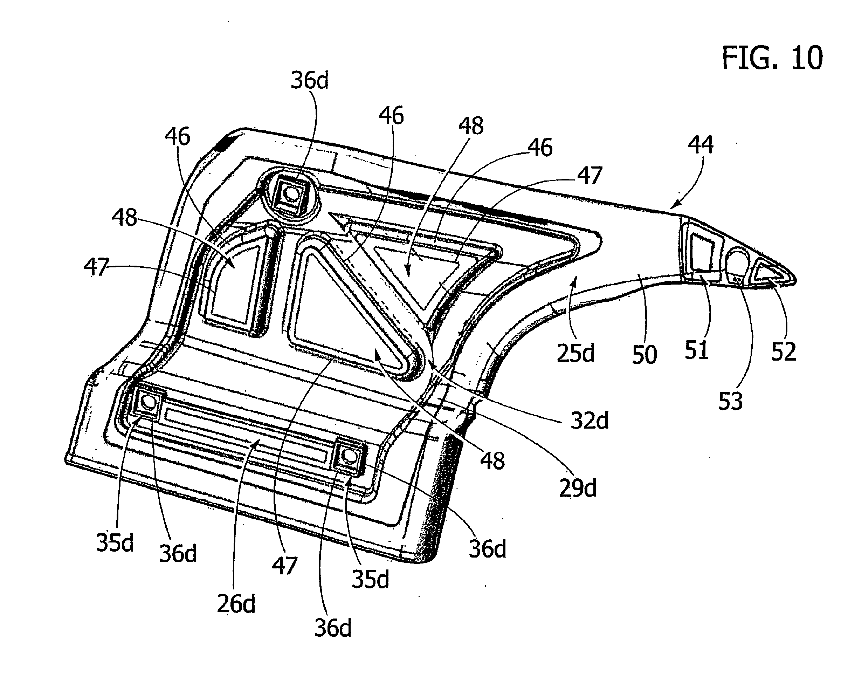

As regards the panel 4 (fig. 1), the skeleton is indicated by reference number 42 and is defined by two elements 43, (figs. 3 and 9) and 44 (fig. 10), made in the same way as the elements 19-21. Therefore, where possible, their component parts are indicated using the same reference numbers used for the element 19, followed by the reference letter "c" and, respectively, by the reference letter "d".

The element 43 is relatively small and, differently from the other skeleton parts, it has no reinforcing channels and has only two receptacle tracks for the glue 28, indicated by 25c and 26c: the track 25c extends in a loop around the portion 29c, while the track 26c is rectilinear and has a rectangular perimeter, which is defined by a rib 45 arranged in contact with the skin 11 of the spoiler 4 and has its ends adjacent to the walls 36c of the seats 35c.

The element 44 comprises a track 26d that extends between two seats 35d and is substantially identical to the track 26c; and a track 25d that extends in a loop along three sides of the perimeter of the element 44 and around an intermediate portion 29d defining a cavity 32d. The cavity 32d houses the seats 35d, the track 26d, and three portions 46 terminating with respective annular ribs 47, which are arranged so as to rest against the skin 11 of the spoiler 4 and define the substantially triangular perimeter of recessed receptacles 48 of the glue 28. One end 50 of the element 44 remains outside the track 25d, has a substantially forwardly pointed shape, and has two annular receptacle tracks 51, 52 for the glue 28 arranged on opposite sides of a drilled and flanged portion 53, aligned with a corresponding through hole (not illustrated) in the skin 11 of the spoiler 4.

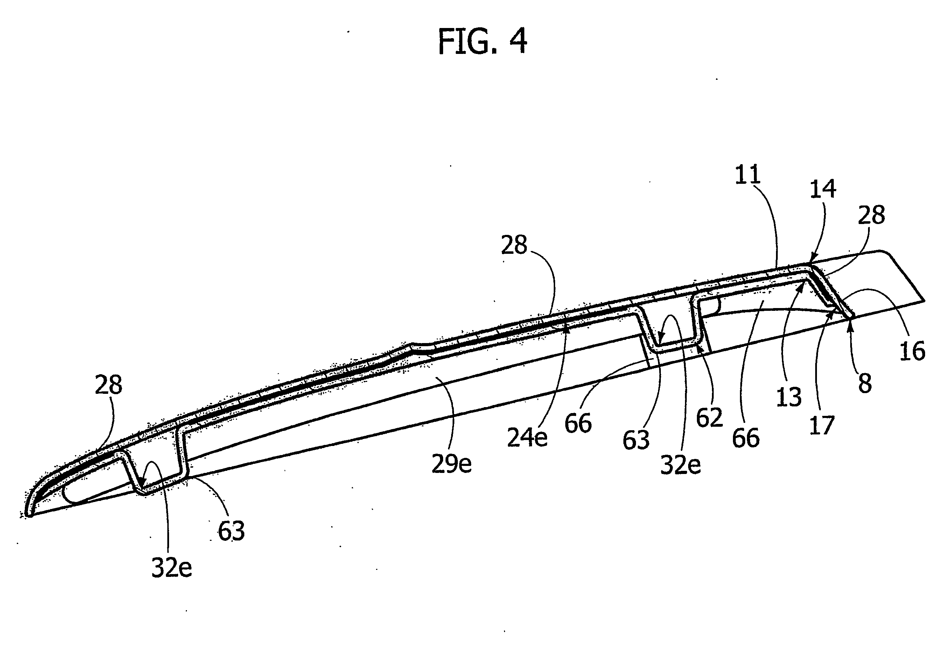

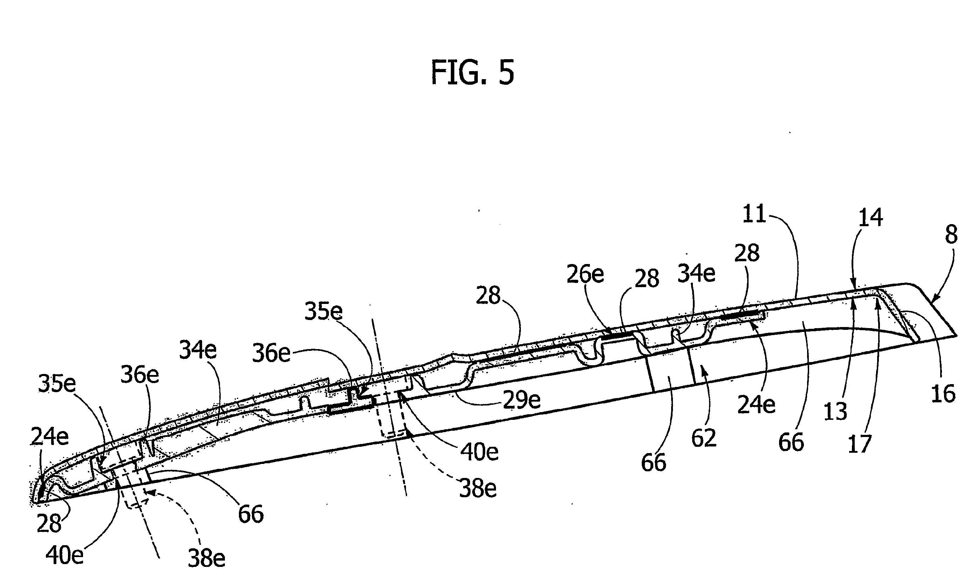

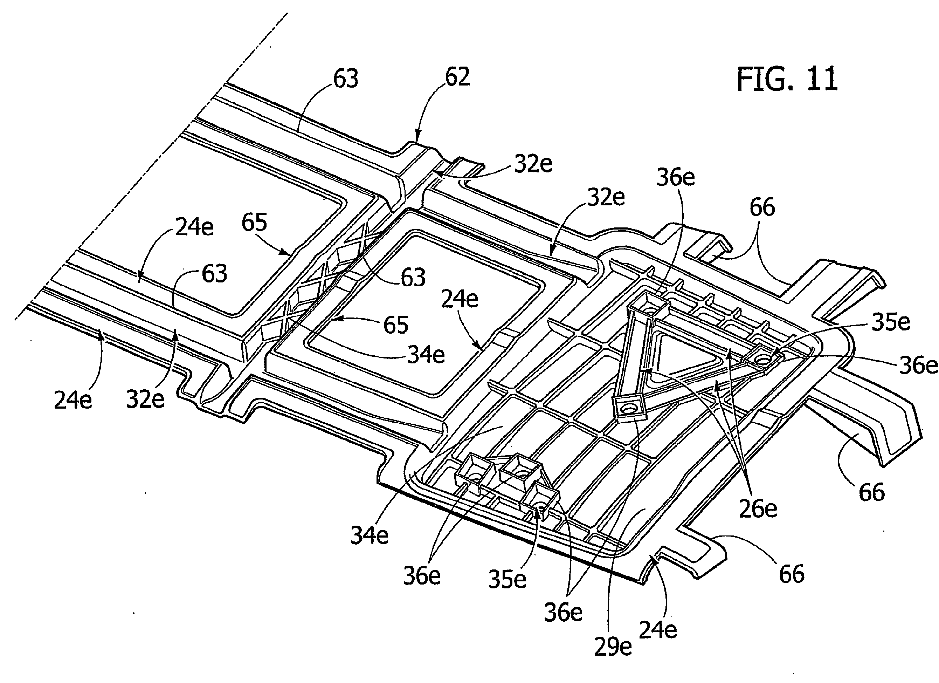

As regards the panel 8 (figs. 1, 4 and 5), the skeleton is indicated by reference number 62, is half illustrated in figure 11, and is defined by a single piece made in the same way as the skeletons 12 and 42. Therefore, where possible, its component parts are indicated using the same reference numbers used for the element 19, followed by the reference letter "e".

In particular, the skeleton 62 comprises, centrally, a network of cross members 63, which have a substantially constant thickness and omega-shaped cross-section so as to define, with the skin 11 of the spoiler 8, respective channels 32e which intersect one another. The cross members 63 delimit between them a plurality of apertures 65. The surface 13 of the spoiler 8 remains uncovered at the apertures 65.

The skeleton 62 comprises two lateral portions 29e, which define respective cavities oriented towards the surface 13 of the spoiler 8 and housing the seats 35e and a plurality of ribs 34e, identical to the ribs 34. Other ribs 34e are housed in part of the channels 32e.

A plurality of appendices 66 extend starting from the portions 29e laterally and backwards to support the lateral extremities of the skin 11 of the spoiler 8.

To receive the glue 28, three rectilinear tracks 26e, substantially identical to the track 26c, are arranged in the portion 29e between three of the seats 35e. Moreover, the skeleton 62 comprises a plurality of tracks 24e, which are obtained along both sides of each channel 32e (and thus around the apertures 65), along the external sides of the perimeter of the portions 29e and in the appendices 66.

The skeletons of the panels 5, 6 and 7 have identical skeletons to those of the skeletons 12, 42 and 62, therefore they are not described in detail.

To obtain the panels 3-8, the skins 11 and the skeletons are manufactured separately by means of injection moulding and then placed on a press (not illustrated). The skins 11 are arranged on a lower support of the press, while the skeletons are placed on an upper support. The screws 38 are pre-mounted on the skeletons 38: sensors arranged on the lower support verify the actual presence of said screws 38.

An anthropomorphic robot deposits the glue 28 on the inside surface 13 of the skin 11, on the basis of stored data relating to the contour, size and position of the recesses and of the tracks on the corresponding skeleton, in order to cover with glue the areas that will be made to coincide with said recesses and tracks when the skin 11 and the skeleton are joined. The amount of glue applied to the surface 13 is gauged according to the available volume in said recesses or tracks.

The supports of the press are then closed so that the skin 11 rests against the respective skeleton long enough to allow the glue to polymerize. While in contact, the glue is able to spread into the respective cavities, but does not leak out and does not damage the contact areas between the skeletons and the skins 11, the dosage having been previously defined on the basis of the available volume.

The fact that the skeletons are manufactured by means of injection moulding of plastic material allows greater freedom for shaping the skeletons with suitable thicknesses. It also allows the plastic material to be distributed so as to increase the strength and rigidity at the points subject to the greatest stress, and makes it possible to reduce the amount of plastic material to a minimum, reduce deformations to a minimum, and determine the best width for the contact areas between the skeletons and the respective skins 11.

To optimize the amount and distribution of the plastic material, it is possible to have skeletons made up of several parts, preferably arranged at the points in which the spoiler is connected to the respective supporting frame.

Injection moulding enables the tracks or receptacle cavities of the glue 28 to be shaped so as to prevent the glue from leaking onto the contact areas and creating additional thicknesses between the skins 11 and the respective skeletons. The constant depth of the tracks or cavities makes it possible to obtain the desired holding strength and to distribute said strength uniformly. Producing the cavities in the form of elongated tracks means, on the one hand, the glue can be applied quickly by robots and, on the other, achieves a better balance between the amount of glue that is used and holding performance.

Moreover, production times using the injection moulding process are relatively low since post-forming waiting times are reduced and trimming of the perimeter edge of the spoiler is not necessary.

Arranging the skin 11 on the lower support and applying the glue 28 to the surface 13 achieves greater precision and makes it easier to position and move the skin 11, the dimensions of which exceed those of the corresponding skeleton.

Lastly, from the above description, it is clear that modifications and variations may be made to the spoilers 3-8 described herein without departing from the scope of the present invention as set forth in the appended claims.

In particular, the screws 38 could be replaced with different fastening elements, always with an internal portion sunk between the skin 11 and the skeleton, and/or said internal portions could be glued.

Recesses or tracks could be obtained on the surface 13 of the skin 11, together with or instead of those on the skeleton; and/or the glue could be applied to the skeleton; and/or the shapes and/or positions of the glue cavities could differ from those illustrated.

## Claims

1. Streamlined panel (3-8) for vehicles comprising:
- a profiled outer skin (11), made of plastic material, and defining a streamlined front surface and a rear surface (13);
- a supporting skeleton (12) made of plastic material;
- glue (28) to bond said supporting skeleton (12) to said rear surface (13);
- at least one fastening element (38) comprising:
a) an internal portion (37) housed in a fixed position between said outer skin (11) and said supporting skeleton (12);
b) an external fastening portion (38) that is fixed with respect to said internal portion (37) ;
**characterized in that** said supporting skeleton (12) comprises at least one element (19) obtained by means of injection moulding and having a variable thickness.

2. Panel according to claim 1, **characterized in that** the variation in the thickness of said supporting skeleton (12) is defined by ribs (34) arranged transversely with respect to said rear surface (13).

3. Panel according to claim 1 or 2, **characterized by** comprising:
- contact areas between said outer skin (11) and said supporting skeleton (12);
- cavities (24-27) defined by said rear surface (13) and by said supporting skeleton (12), having a closed perimeter defined by said contact areas, and housing said glue (28).

4. Panel according to claim 3, **characterized in that** said cavities (24-27) have a substantially constant depth.

5. Panel according to claim 4, **characterized in that** at least some of said cavities (24-27) are defined by tracks having a substantially constant cross-section.

6. Panel according to claim 5, **characterized in that** one of said tracks (25d) extends along at least a portion of the perimeter of said supporting skeleton (42) .

7. Panel according to claim 5 or 6, **characterized in that** one of said tracks (25a) surrounds an intermediate portion (29a) that houses at least one seat (35a) for the internal portion of said fastening element.

8. Panel according to any one of the claims from 2 to 7, **characterized in that** one of said tracks (26c) extends in a rectilinear direction and has its ends adjacent to two seats (35c) for the internal portions of respective fastening elements.

9. Panel according to any one of the claims from 3 to 8, **characterized in that** said cavities (24-27) comprise recesses obtained in said supporting skeleton (12), and **in that** said outer skin (11) has a constant thickness.

10. Panel according to any one of the previous claims, **characterized in that** said supporting skeleton (62) is defined by a single part that partially covers said rear surface (13).

11. Panel according to any one of the claims from 1 to 9, **characterized in that** said supporting skeleton (12) is defined by a plurality of elements (19-21) that are spaced from one another along said rear surface (13).

## Patentansprüche

1. Stomlinienförmige Platte (3-8) für Fahrzeuge umfassend:
- eine profilierte Außenhaut (11), hergestellt aus Kunststoffmaterial, und definierend eine stromlinienförmige Frontfläche und eine Rückfläche (13);
- ein stützendes Skelett (12), hergestellt aus Kunststoffmaterial;
- Kleber (28), zur Bindung des stützenden Skeletts (12) an die Rückfläche (13);
- wenigstens ein Befestigungselement (38), aufweisend:
a) einen inneren Abschnitt (37), der in einer festen Position zwischen der äußeren Haut (11) und dem stützenden Skelett (12) untergebracht ist;
b) einen äußeren befestigenden Abschnitt (38), der in Bezug auf den inneren Abschnitt (37) fest ist;
**dadurch gekennzeichnet, dass** das stützende Skelett (12) wenigstens ein Element (19) umfasst, welches mittels Spritzgießens erhalten wurde und eine variable Dicke hat.

2. Platte nach Anspruch 1, **dadurch gekennzeichnet dass** die Variation in der Dicke des stützenden Skeletts (12) durch Rippen (34) definiert wird, die transversal in Bezug auf die Rückenfläche (13) angeordnet sind.

3. Platte nach Anspruch 1 oder 2, **dadurch gekennzeichnet, dass** sie umfasst:
- Kontaktbereiche zwischen der äußeren Haut (11) und dem stützenden Skelett (12);
- Hohlräume (24-27), welche durch die Rückfläche (13) und durch das stützende Skelett (12) definiert werden, und die einen geschlossenen Umfang haben, der durch die Kontaktbereiche definiert wird und die den kleber (28) beherbergen.

4. Platte nach Anspruch 3, dadurch gekenntzeichnet, dass die Hohlräume (24-27) eine im wesentlichen konstante Tiefe haben.

5. Platte nach Anspruch 4, **dadurch gekennzeichnet, dass** wenigstens einige der Hohlräume (24-27) durch Schienen definiert werden, welche einen im wesentlichen konstanten Querschnitt haben.

6. Platte nach Anspruch 5, dadurch gekenntzeichnet, dass wenigstens eine der Schienen (27d) sich entlang wenigstens eines Abschnittes des Umfanges des stützenden Skelettes (42) erstreckt.

7. Platte nach Anspruch 5 oder 6, **dadurch gekennzeichnet, dass** wenigstens eine der Schienen (25a) einen intermediären Abschnitt (29a) umgibt, welcher wenigstens einen Sitz (35a) für den inneren Abschnitt des Befestigungselements beherbergt.

8. Platte nach einem der Ansprüche 2 bis 7, **dadurch gekennzeichnet, dass** wenigstens eine der Schienen (26c) sich in einer geradlinigen Richtung erstreckt und ihr Ende angrenzend an zwei Sitze (35c) für die inneren Abschnitte der entsprechenden Befestigungselemente findet.

9. Platte nach einem der Ansprüche 3 bis 8, **dadurch gekennzeichnet, dass** die Hohlräume (24-27) Ausnehmungen aufweisen, die in dem stützenden Skelett (12) erhalten wurden, und dadurch, dass die äußere Haut (11) eine konstante Dicke hat.

10. Platte nach einem der vorhergehenden Ansprüche, **dadurch gekennzeichnet, dass** das stützende Skelett (62) durch ein Einzelteil definiert wird, welches teilweise die Rückfläche (13) bedeckt.

11. Platte nach einem der Ansprüche 1 bis 9, **dadurch gekennzeichnet, dass** das stützende Skelett (12) durch eine Mehrzahl von Elementen (19-21) definiert wird, die von einander entlang der Rückfläche (13) beabstandet sind.

## Revendications

1. Panneau caréné (3-8) pour des véhicules comprenant :
- une peau extérieure profilée (11), en matériau plastique et définissant une surface avant carénée et une surface arrière (13) ;
- une ossature porteuse (12) en matériau plastique ;
- de la colle (28) pour assembler ladite ossature porteuse (12) à ladite surface arrière (13) ;
- au moins un élément de fixation (38) comprenant :
a) une partie interne (37) logée dans une position fixe entre ladite peau extérieure (11) et ladite ossature porteuse (12) ;
b) une partie de fixation externe (38) qui est fixée par rapport à ladite partie interne (37) ;
**caractérisé en ce que** ladite ossature porteuse (12) comprend au moins un élément (19) obtenu par moulage par injection et présentant une épaisseur variable.

2. Panneau selon la revendication 1, **caractérisé en ce que** la variation d'épaisseur de ladite ossature porteuse (12) est définie par des nervures (34) disposées transversalement par rapport à ladite surface arrière (13).

3. Panneau selon la revendication 1 ou 2, **caractérisé en ce qu'**il comprend :
- des zones de contact entre ladite peau extérieure (11) et ladite ossature porteuse (12) ;
- des cavités (24-27) définies par ladite surface arrière (13) et par ladite ossature porteuse (12), présentant un périmètre fermé défini par lesdites zones de contact, et logeant ladite colle (28).

4. Panneau selon la revendication 3, **caractérisé en ce que** lesdites cavités (24-27) présentent une profondeur sensiblement constante.

5. Panneau selon la revendication 4, **caractérisé en ce qu'**au moins quelques-unes desdites cavités (24-27) sont définies par des voies de roulement dotées d'une section transversale sensiblement constante.

6. Panneau selon la revendication 5, **caractérisé en ce que** l'une desdites voies de roulement (25d) s'étend au moins le long d'une partie du périmètre de ladite ossature porteuse (42).

7. Panneau selon la revendication 5 ou 6, **caractérisé en ce que** l'une desdites voies de roulement (25a) entoure une partie intermédiaire (29a) qui loge au moins un siège (35a) pour la partie interne dudit élément de fixation.

8. Panneau selon l'une quelconque des revendications 2 à 7, **caractérisé en ce que** l'une desdites voies de roulement (26c) s'étend dans une direction rectiligne et ses extrémités sont adjacentes à deux sièges (35c) pour les parties internes des éléments de fixation respectifs.

9. Panneau selon l'une quelconque des revendications 3 à 8, **caractérisé en ce que** lesdites cavités (24-27) comprennent des évidements obtenus dans ladite ossature porteuse (12) et **en ce que** ladite peau extérieure (11) présente une épaisseur constante.

10. Panneau selon l'une quelconque des revendications précédentes, **caractérisé en ce que** ladite ossature porteuse (62) est définie par une seule partie qui recouvre partiellement ladite surface arrière (13).

11. Panneau selon l'une quelconque des revendications 1 à 9, **caractérisé en ce que** ladite ossature porteuse (12) est définie par une pluralité d'éléments (19-21) qui sont espacés les uns des autres le long de ladite surface arrière (13).
